# EUROPEAN PATENT APPLICATION

(11) **EP 2 481 477 A1**
(43) Date of publication of application: **01.08.2012**
(21) Application number: 12152511.7
(22) Date of filing: 25.01.2012
(51) Int. Cl.: B01J 19/00, B01J 19/18, C08F 20/18, C08F 2/01, C08F 2/02

(54) **Continuous polymerization apparatus and process for producing polymer composition**

(30) Priority: 26.01.2011 JP 2011014342
(71) Applicant: Sumitomo Chemical Company, Limited, Tokyo 104-8260 (JP)
(72) Inventor: Sumida, Masakazu, Niihama-shi, Ehime 792-8521 (JP); Yamazaki, Kazuhiro, Niihama-shi, Ehime 792-8521 (JP); Sato, Yoshinori, Niihama-shi, Ehime 792-8521 (JP); Wake, Takao, Niihama-shi, Ehime 792-8521 (JP)
(74) Representative: Vossius & Partner

(57) **Abstract**

The present invention is directed to provide a novel continuous polymerization apparatus which is able to more efficiently produce a polymer composition having a variety of properties.

In a continuous polymerization apparatus at least two reactors (10, 20) of a complete mixing type are used. Each of the reactors (10, 20) is provided with a supply port (11a, 21a) and an effluent port (11b, 21b); the respective supply ports (11a, 21a) of the two reactors (10, 20) are commonly connected to a supply source (1, 3) of a raw material monomer and a polymerization initiator; a flow control valve (8) is installed on a raw material supply line (9) for supplying a mixture comprising the raw material monomer and the polymerization initiator from the supply source (1, 3) of the raw material monomer and the polymerization initiator to the respective supply ports (11a, 21a) of the two reactors (10, 20); and the respective effluent ports (11b, 21b) of the two reactors (10, 20) are connected to a common effluent line (27).

## Description

### BACKGROUND OF THE INVENTION

### Field of the Invention

The present invention relates to a continuous polymerization apparatus, that is, an apparatus for conducting polymerization continuously. Further, the present invention also relates to a process for producing a polymer composition conducted by using such continuous polymerization apparatus.

### Description of Related Art

Resin compositions such as methacrylic ester polymers are produced by continuous polymerization in which a raw material polymer, a polymerization initiator and the like are continuously supplied to a reactor to be polymerized. As such continuous polymerization processes, there are known a continuous solution polymerization process using a solvent (or a dispersion medium, which also applies hereinafter) to conduct continuous polymerization, and a continuous bulk polymerization process using no solvent to conduct continuous polymerization.

In general, a continuous solution polymerization process is not efficient since use of a solvent causes a low productivity. In contrast, a continuous bulk polymerization process has an advantage of being able to produce a polymer composition efficiently since the polymerization is conducted without using a solvent. Practically, the continuous bulk polymerization, however, has various problems compared with the continuous solution polymerization, such as that reaction control is difficult due to high viscosity of a reaction mixture, and when an inner surface of a reactor is cooled to remove heat from a reaction system, this degrades quality of a polymer composition and thus of a resin composition obtained therefrom. Then, a process is proposed which uses a reactor of a complete mixing type, fully fills the reactor with liquid to exclude a gas phase part therefrom, and conducts continuous bulk polymerization under an adiabatic condition with no heat transfer to or from the outside (JP 07-126308 A). Further, in order to assure such adiabatic condition, a continuous bulk polymerization apparatus is proposed which controls a supply amount of a raw material monomer and a supply amount of a polymerization initiator so as to make a temperature in the reactor equal to a setting temperature of an outer surface of the reactor (JP 2006-104282 A).

### SUMMARY OF THE INVENTION

### Technical Problem

In recent years, applications of resin compositions such as methacrylic ester polymers have been expanded. Furthermore, a demand is increasing for more efficiently producing a polymer composition which has a variety of properties. However, it has been proved that the conventional continuous polymerization apparatuses (JP 07-126308 A and JP 2006-104282 A) are not always sufficient to meet the demand.

The purpose of the present invention is to provide a novel continuous polymerization apparatus and to provide a process for producing a polymer composition, which process is able to be conducted by using such continuous polymerization apparatus and to more efficiently produce a polymer composition having a variety of properties.

### Solution to Problem

The inventors considered using at least two reactors of a complete mixing type in combination to conduct continuous polymerization. As to a continuous solution polymerization process, apparatuses having two stages of reactors are known, such as that the most part of polymerization is conducted in the former reactor and the polymerization is completed in the latter reactor while removing a polymerization initiator therefrom (JP 01-172401 A); and that polymerization is conducted to some extent in the former reactor and a solvent is added to the latter reactor to conduct polymerization (JP 05-331212 A). In such apparatuses, however, removal of heat from a reaction system is conducted by reflux cooling (a raw material monomer or the like in the reactor is evaporated to be taken out of the reactor, and it is returned to the reactor again after having been subjected to cold condensation), this brings about local or rapid cooling of the reaction system, which causes gel to adhere to and grow on the inner surface of the reactor. Especially when the polymerization is conducted under conditions of a small amount of solvent or a high polymerization ratio to attain an increased productivity, a mixture in the reaction system has an increased viscosity, this tends to cause local or rapid cooling of the reaction system, and the adhering and growing of the gel on the inner surface of the reactor proceeds significantly. Thus, there is a problem such as that gelled substance is immixed into a resultant polymer composition as an impurity. Further, as methods for obtaining a polymer composition having a bimodal molecular weight distribution, there are known a melt kneading method by melt blending a polymer of a high molecular weight and a polymer of a low molecular weight which have been produced separately (JP 2008-538794 A), and a two stage polymerization method in which a polymer is preliminarily produced and then a polymer having a molecular weight different therefrom is produced (WO 2007/060891). However, all of these methods merely use a conventional and commonly-used polymerization apparatus. The inventors have considered earnestly on a novel continuous polymerization apparatus which is able to more efficiently produce a polymer composition having a variety of properties, and finally completed the present invention.

The present invention provides the following [1] to [6].
[1] A continuous polymerization apparatus suitable for continuously polymerizing a methacrylic ester monomer, and comprising at least two reactors of a complete mixing type, **characterized in that**
   each of the reactors is provided with a supply port and an effluent port;
   the respective supply ports of the two reactors are commonly connected to a supply source of a raw material monomer and a polymerization initiator;
   a flow control valve is installed on a raw material supply line for supplying a mixture comprising the raw material monomer and the polymerization initiator from the supply source of the raw material monomer and the polymerization initiator to the respective supply ports of the two reactors; and
   the respective effluent ports of the two reactors are connected to a common effluent line.
[2] The continuous polymerization apparatus according to the above [1], wherein the effluent port of each of the reactors is located at a reactor's top.
[3] The continuous polymerization apparatus according to the above [1] or [2], wherein the two reactors are both suitable to conduct continuous bulk polymerization.
[4] The continuous polymerization apparatus according to any of the above [1] to [3], wherein any of said supply ports of the two reactors or another supply port provided to any of the two reactors is connected to a supply source of an additional polymerization initiator.
[5] The continuous polymerization apparatus according to any of the above [1] to [4], wherein the two reactors have an inner volume which is different from each other.
[6] A process for producing a polymer composition conducted by using the continuous polymerization apparatus according to any of the above [1] to [5], which comprises
   a dividing step of dividing a mixture comprising a raw material monomer and a polymerization initiator supplied from the supply source of the raw material monomer and the polymerization initiator into at least a first raw material fraction and a second raw material fraction by the flow control valve;
   a first polymerization step of supplying the first raw material fraction to a first reactor of said two reactors through the supply port of the first reactor to be subjected to continuous polymerization under an adiabatic condition in the first reactor, and taking a resultant first polymer fraction from the effluent port of the first reactor;
   a second polymerization step of supplying the second raw material fraction to a second reactor of said two reactors through the supply port of the second reactor to be subjected to continuous polymerization under an adiabatic condition in the second reactor, and taking a resultant second polymer fraction from the effluent port of the second reactor; and
   a blending step of blending the first polymer fraction and the second polymer fraction to obtain a polymer composition.

### Advantageous Effects of Invention

According to the present invention, there is provided a novel continuous polymerization apparatus. Further, according to the present invention, there is also provided a process for producing a polymer composition, which process is able to be conducted by using such continuous polymerization apparatus and to more efficiently produce a polymer composition having a variety of properties.

### Brief Description of Drawings

Fig. 1 shows a schematic view of a continuous polymerization apparatus in one embodiment of the present invention.
Fig. 2 shows a schematic view of various arrangements of a flow control valve in one embodiment of the present invention.

Following reference signs denote the following elements:
1 ... raw material monomer tank (supply source of raw material monomer)
3 ··· polymerization initiator tank (supply source of polymerization initiator and, if necessary, of raw material monomer)
5 ··· pump
6a, 6b, 6c, 6d ··· line
7 ··· pump
8 ··· flow control valve
9 ··· raw material supply line
9a ··· common part
9b ··· first part
9c ··· second part
10 ··· first reactor
11a, 11c ··· supply port
11b ··· effluent port
13 ··· jacket (temperature regulating means)
14 ··· stirrer
15 ··· effluent line
17 ··· polymerization initiator tank (supply source of additional polymerization initiator and, if necessary, of raw material monomer)
18 ··· line
19 ··· pump
20 ··· second reactor
21a ··· supply port
21b ··· effluent port
21c ··· another supply port
23 ··· jacket (temperature regulating means)
24 ··· stirrer
25 ··· effluent line
26 ··· mixer
27 ··· common effluent line
31 ··· preheater
33 ··· devolatilizing extruder
35 ··· discharge line
37 ··· recovery tank
T ··· temperature sensor (temperature detecting means)

### DETAILED DESCRIPTION OF THE EMBODIMENTS

A continuous polymerization apparatus of the present invention is used for continuously polymerizing a methacrylic ester monomer, and comprises at least two reactors, and continuous polymerization such as any of continuous bulk polymerization and continuous solution polymerization is conducted in each of the reactors. A continuous polymerization apparatus of the present invention will be understood as a continuous bulk polymerization apparatus when continuous bulk polymerization is conducted in all of the reactors, and will be understood as a continuous solution polymerization apparatus when continuous solution polymerization is conducted in all of the reactors. However, a continuous polymerization apparatus of the present invention is not limited thereto, but may be those wherein continuous bulk polymerization is conducted in one reactor (e.g. a reactor for which polymerization ratio as a target or a guide is low) and continuous solution polymerization is conducted in another reactor (e.g. a reactor for which polymerization ratio as a target or a guide is high).

Hereinafter, one embodiment of the present invention will be described in detail with reference to drawings.

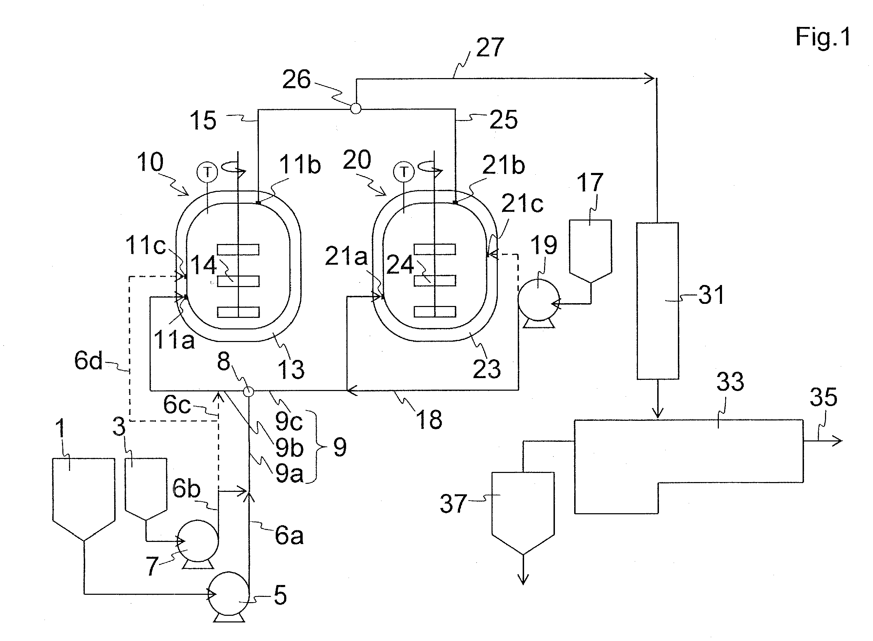

Referring to Fig. 1, a continuous polymerization apparatus in this embodiment comprises at least the first reactor 10 and the second reactor 20. These reactors 10 and 20 are both a reactor of a complete mixing type, and are used to conduct continuous bulk polymerization in this embodiment.

More specifically, the first reactor 10 is provided with a supply port 11a and an effluent port 11b, and preferably further provided with a jacket 13 as a temperature regulating means for regulating a temperature of an outer surface of the reactor and a stirrer 14 for stirring (mixing) a content therein. Similarly, the second reactor 20 is provided with a supply port 21a and an effluent port 21b, and preferably further provided with a jacket 23 surrounding an outer surface of the reactor as a temperature regulating means for regulating a temperature of the outer surface of the reactor and a stirrer 24 for stirring (mixing) a content therein. The effluent ports 11b and 21b are located at a top of each of the reactors in this embodiment, but not limited thereto. On the other hand, the supply ports 11a and 21a may be generally located at an appropriate position of a lower part of each of the reactors, although this embodiment is not limited thereto. Each of these reactors 10 and 20 may be provided with a temperature sensor T as a temperature detecting means for detecting a temperature in the reactor.

The first reactor 10 and the second reactor 20 may have the same or different inner volume from each other. Making the inner volume of the first reactor and the inner volume of the second reactor different from each other, it is possible to effectively differentiate between the first reactor 10 and the second reactor 20 in an average residence time.

The stirrers 14 and 24 are a member for substantially attaining a complete mixing condition in the reactors. These stirrers may have any appropriate stirring blade(s), for example, may have blades of MIG impeller, MAXBLEND impeller (registered trademark, manufactured by Sumitomo Heavy Industries, Ltd.), paddle impeller, double helical ribbon impeller, FULLZONE impeller (registered trademark, manufactured by Kobelco Eco-Solutions Co., Ltd.) and so on. In order to increase stirring effect in the reactor, it is preferable to provide the reactor with a baffle(s). However, this embodiment is not limited thereto, but may have any appropriate configuration in place of the stirrers 14 and 24 as long as a complete mixing condition can be substantially attained in the reactors.

In general, the reactors 10 and 20 are more preferable when they have a higher stirring efficiency. However, in view of avoiding the reactors from being added with an unnecessary amount of heat by the stirring operation, it is preferable that a power of stirring is not more than necessary. The power of stirring is not specifically limited, but preferably 0.5 to 20 kW/m³, and more preferably 1 to 15 kW/m³. As a viscosity of the reaction system becomes higher (or a content ratio of a polymer in the reaction system becomes higher), it is preferable to set the power of stirring at a larger level.

As shown in Fig. 1, the supply port 11a of the first reactor 10 and the supply port 21a of the second reactor 20 are commonly connected to a raw material monomer tank (a supply source of a raw material monomer) 1 and a polymerization initiator tank (a supply source of a polymerization initiator and, if necessary, of a raw material monomer) 3 (more specifically, through a common part 9a of a raw material supply line 9 hereinafter described). In this embodiment, the supply sources of the raw material monomer and the polymerization initiator is the raw material monomer tank 1 and the polymerization initiator tank 3, but the number of the supply sources of the raw material monomer and the polymerization initiator, the forms of the raw material monomer and the polymerization initiator (in a case of a mixture, for example, a composition thereof) and so on are not particularly limited as long as the raw material monomer and the polymerization initiator can be supplied to form a mixture comprising the raw material monomer and the polymerization initiator appropriately (at least at the common part 9a of the raw material supply line 9).

A raw material supply line 9 is located so that the raw material monomer and the polymerization initiator from the raw material monomer tank 1 and polymerization initiator tank 3 are supplied in the form of a mixture comprising them to the first reactor 10 and the second reactor 20 via the supply ports 11a and 21a, respectively. More specifically, the raw material supply line 9 consists of the common part 9a connected commonly with the raw material monomer tank 1 and the polymerization initiator tank 3, a first part 9b supplying part of the above mixture passing through the common part 9a to the first reactor 10 via the supply port 11a, and a second port 9c supplying the other part of the above mixture passing through the common part 9a to the second reactor 20 via the supply port 21a. At upstream of the raw material supply line 9, more concretely, the raw material monomer tank 1 is connected to the common part 9a of the raw material supply line 9 via a pump 5 and a line 6a, and the polymerization initiator tank 3 is connected to the common part 9a of the raw material supply line 9 via a pump 7 and a line 6b. The raw material supply line 9 is provided with a flow control valve 8 at any appropriate position thereof. The effluent port 11b of the first reactor 10 and the effluent port 21b of the second reactor 20 are connected to a common effluent line 27 through effluent lines 15 and 25, respectively, and via a mixer 26 in the embodiment shown in Fig. 1. Thus, the first reactor 10 and the second reactor 20 are connected in parallel. There is preferably no pump on the effluent line 15 lying downstream of the effluent port 11b of the first reactor 10, and the effluent line 25 lying downstream of the effluent port 21b of the second reactor 20, and the common effluent line 27.

It is not necessary for this embodiment, but the first reactor 10 may be connected to the polymerization initiator tank 3 without passing through the common part 9a of the raw material supply line 9. For example, as shown by a dotted line in Fig. 1, a line 6c and/or a line 6d may be located. In a case having the line 6c, the supply port 11a of the first reactor 10 may be connected to the polymerization initiator tank 3 via the pump 7 through the line 6b, the line 6c and the first part 9b of the raw material supply line 9 as shown in Fig. 1. In a case having the line 6d, the first reactor 10 may be provided with another supply port 11c so that this supply port 11c is connected to the polymerization initiator tank 3 via the pump 7 through the line 6b and the line 6d as shown in Fig. 1.

Also, it is not necessary for this embodiment, but the second reactor 20 may be connected to a polymerization initiator tank (a supply source of an additional polymerization initiator and, if necessary, of a raw material monomer) 17 via a pump 19. In this embodiment, the supply source of the additional polymerization initiator is the polymerization initiator tank 17, but the number of the supply sources of the additional polymerization initiator, the form of the polymerization initiator (in a case of a mixture, for example, a composition thereof) and so on are not particularly limited as long as the additional polymerization initiator can be supplied to the second reactor 20 appropriately. In a case where the polymerization initiator tank 17 and the pump 19 are present, the supply port 21a of the second reactor 20 may be connected to the polymerization initiator tank 17 via the pump 19 through a line 18 and the second part 9c of the raw material supply line 9 as shown by a solid line in Fig. 1, or the second reactor 20 may be provided with another supply port 21c so that this supply port 21c is connected to the polymerization initiator tank 17 via the pump 19 as shown by, for example, a dotted line in Fig. 1.

The pumps 5 and 7 and, if present, the pump 19 are not particularly limited, but are preferably pumps being able to set flow rates from the raw material monomer tank 1 and the polymerization initiator tank 3 and a flow rate from the polymerization initiator tank 17, if present, at constant values. More specifically, multiple reciprocating pumps are preferred, and more preferred are pulsation-free controlled-volume pumps such as a duplicate pulsation-free controlled-volume pump and a triplex pulsation-free controlled-volume pump. By using these, it is possible to control supply amounts (or supply flow rates, which also applies hereinafter) of the raw material monomer and the polymerization initiator to the first reactor 10 and the second reactor 20, and, if necessary, an additional supply amount of the polymerization initiator (or the raw material monomer and the polymerization initiator) to the second reactor 20.

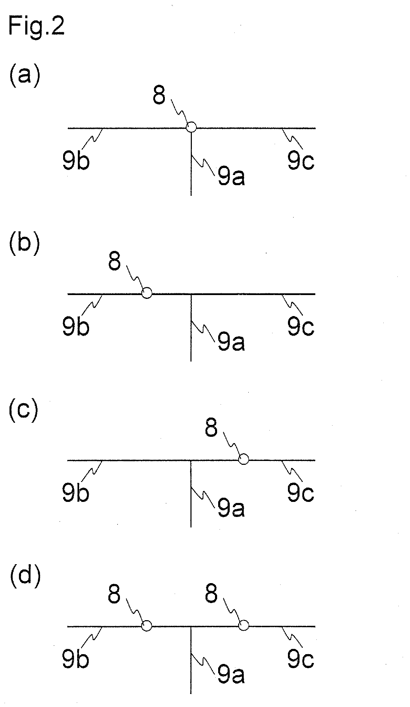

The flow control valve 8 is not particularly limited as long as it is a valve being able to pass and divide the mixture at a certain ratio into the first part 9b and the second part 9c of the raw material supply line 9, wherein the mixture comprises the raw material monomer and the polymerization initiator and flows into the valve through the common part 9a of the raw material supply line 9 from the raw material monomer tank 1. and the polymerization initiator tank 3. Such flow control valve 8 is installed at any appropriate position on the raw material supply line 9 so that it can control flow rates (more specifically, a ratio of the flow rates) of the above mixture passing the first part 9b and the second part 9c. In an example, as shown in Fig. 1 and Fig. 2(a), the flow control valve 8 may be located on a branching point at which the common part 9a of the raw material supply line 9 branches into the first part 9b and the second part 9c, and thereby the flow rates of the above mixture passing the first part 9b and the second part 9c can be controlled. In another example, as shown in Fig. 2(b), at least one flow control valve 8 may be located on the first part 9b of the raw material supply line 9, and thereby the flow rate of the above mixture passing the first part 9b can be controlled, and therefore the rest of the mixture passes the second part 9c, so that the flow rate of the above mixture passing the second part 9c can also be controlled. In yet another example, as shown in Fig. 2(c), at least one flow control valve 8 may be located on the second part 9c of the raw material supply line 9, and thereby the flow rate of the above mixture passing the second part 9c can be controlled, and therefore the rest of the mixture passes the first part 9b, so that the flow rate of the above mixture passing the first part 9b can also be controlled. In yet another example, at least two embodiments of the three embodiments shown in these Figs. 2(a) to (c) may be combined. For example, as shown in Fig. 2(d), at least one flow control valve 8 may be located on the first part 9b of the raw material supply line 9, and at least one flow control valve 8 may be located on the second part 9c of the raw material supply line 9. The number, locating position, and so on of the flow control valve 8 are not particularly limited as long as the above mixture can be passed to the first part 9b and the second part 9c of the raw material supply line 9 at a certain ratio. Valves able to be used as the flow control valve 8 comprise, for example, globe valves, gate valves, ball valves, butterfly valves, lambda port valves, needle valves, stop valves, diaphragm valves, pinch valves, plug valves, and so on. Among them, globe valves, butterfly valves, lambda port valves, needle valves, stop valves, and diaphragm valves are preferred.

It is preferable that each of the members described
above with reference to Fig. 1 is appropriately connected to a control unit (not shown in the drawings) so as to enable the control unit to control their operations. Thereby, in order to make the temperature of the outer surface of the reactor set for each of the jackets (temperature regulating means) 13 and 23 correspond to the temperature in the reactor detected by the temperature sensor (temperature detecting means) T with respect to each of the first reactor 10 and the second reactor 20, the apparatus is controllable by adjusting the respective supply amounts of the raw material monomer and the polymerization initiator to the first reactor 10 and the second reactor 20 with the operation of the pumps 5 and 7 and the flow control valve 8 or by regulating the temperature of the outer surface of the reactor set for the jackets 13 and 23; and also, in a case where the polymerization initiator tank 17 and the pump 19 are present, the apparatus is controllable by adjusting the additional supply amount of the polymerization initiator (or the raw material monomer and the polymerization initiator) to the second reactor 20 with the operation of the pump 19.

The jackets 13 and 23 surround almost the whole of the reactors 10 and 20, respectively to appropriately heat or retain the heat of the reactors 10 and 20 by introducing steam, hot water, organic heat medium or the like from a heat medium supply route (not shown in the drawings). The temperature of the jackets 13 and 23 is able to be appropriately regulated with a temperature or pressure of the heat medium to be introduced. The heat medium introduced into the jackets 13 and 23 is removed from a heat medium discharge route (not shown in the drawings). The temperature and/or pressure of the jackets 13 and 23 is detected by a sensor such as a temperature sensor (not shown in the drawings) located on the heat medium discharge route. The point of location of a sensor such as the temperature sensor is not particularly limited, but it may be located, for example, on the heat medium supply route, or in the jackets 13 and 23.

For the polymerization reaction in the reactors 10 and 20, it is required to proceed at a generally constant temperature in each of the reactors 10 and 20 in view of obtaining a polymer with a constant quality. Therefore, the above described temperature regulating means (jackets 13 and 23) is controlled at a constant temperature which has been set beforehand, so that the temperature inside the reactors 10 and 20 can be maintained respectively at a generally constant temperature.

The setting temperature of the above described temperature regulating means (jackets 13 and 23) is transmitted to a supply flow rate control means, which is hereinafter described, to be used as data for determining whether control of the supply flow rate with the monomer supply means (pump 5) and/or the initiator supply means (pump 7 and, if present, pump 19) and the flow control valve 8 is necessary or not. The setting temperature of the above described temperature regulating means (jackets 13 and 23) can be regulated by controlling the temperature or pressure of the above described heat medium.

As to the supply flow rate control means, an example thereof is a control unit (not shown in the drawings) provided with CFU, ROM, RAM and so on.

The ROM of the control unit is a device for storing a program which controls the pumps 5, 7 and, if present, the pump 19, and the flow control valve 8. The RAM of the control unit is a device for temporarily storing data of the temperatures in the reactors 10 and 20 detected by the temperature sensor T, data of the setting temperatures of the jackets 13 and 23 in order to execute the above program.

The CPU of the control unit executes the program stored in the ROM based on data such as the data of the temperatures in the reactors 10 and 20 and the data of the setting temperatures of the jackets 13 and 23 stored in the above RAM so that the supply flow rates of the raw material monomer and/or the polymerization initiator to the reactors 10 and 20 are controlled by the monomer supply means (pump 5), the initiator supply means (pump 7 and, if present, pump 19) and/or the flow control valve 8.

An example of the control by the supply flow rate control means (control unit) will be described below.

When the temperature in the reactor 10 detected by the temperature sensor T exceeds the setting temperature of the jacket 13 as the temperature regulating means, the CPU executes the program in the ROM to control, for example, the pump 7 so as to decrease the supply flow rate of the polymerization initiator into the reactor 10. When the temperature in the reactor 20 detected by the temperature sensor T exceeds the setting temperature of the jacket 23 as the temperature regulating means, the CPU executes the program in the ROM to control, for example, the pump 7 so as to decrease the supply flow rate of the polymerization initiator into the reactor 20. In a case where the polymerization initiator tank 17 and the pump 19 are present, when the temperature in the reactor 20 detected by the temperature sensor T exceeds the setting temperature of the jacket 23 as the temperature regulating means while the pump 19 supplies the polymerization initiator to the reactor 20 to conduct the polymerization, the CPU executes the program in the ROM to control, for example, the pump 19 so as to decrease the supply flow rate of the polymerization initiator into the reactor 20. The control of the pump 7 and the pump 19 may be appropriately combined with the control of the flow control valve 8. For example, the supply flow rate of the polymerization initiator into the reactor 10 can be decreased by controlling the flow control valve 8 while controlling the pump 7. Also, the supply flow rate of the polymerization initiator into the reactor 20 can be decreased by controlling the flow control valve 8 while controlling the pump 7 and/or the pump 19. By conducting such control, polymerization heat generated in the reactors 10 and/or 20 can be decreased, and thereby the temperatures in the reactors 10 and/or 20 can be lowered.

On the other hand, when the temperature in the reactor 10 is below the setting temperature of the jacket 13, the CPU executes the program in the ROM to control, for example, the pump 7 so as to increase the supply flow rate of the polymerization initiator into the reactor 10. When the temperature in the reactor 20 is below the setting temperature of the jacket 23, the CPU executes the program in the ROM to control, for example, the pump 7 so as to increase the supply flow rate of the polymerization initiator into the reactor 20. In a case where the polymerization initiator tank 17 and the pump 19 are present, when the temperature in the reactor 20 is below the setting temperature of the jacket 23 while the pump 19 supplies the polymerization initiator to the reactor 20 to conduct the polymerization, the CPU executes the program in the ROM to control, for example, the pump 19 so as to increase the supply flow rate of the polymerization initiator into the reactor 20. The control of the pump 7 and the pump 19 may be appropriately combined with the control of the flow control valve 8. For example, the supply flow rate of the polymerization initiator into the reactor 10 can be increased by controlling the flow control valve 8 while controlling the pump 7. Also, the supply flow rate of the polymerization initiator into the reactor 20 can be increased by controlling the flow control valve 8 while controlling the pump 7 and/or the pump 19. By conducting such control, polymerization heat generated in the reactors 10 and/or 20 can be increased, and thereby the temperatures in the reactors 10 and/or 20 can be raised.

For example, when the control over the pump 7 and, if present, the pump 19 for the polymerization reaction in the reactors 10 and 20 results in remarkable decrease in the total supply flow rate into the reactors 10 and 20, it is preferable to not only control the pump 7 and, if present, the pump 19 so as to decrease the supply flow rate of the polymerization initiator, but also to control the pump 5 so as to increase the supply flow rate of the raw material monomer at the same time.

Further, as another example of the control, the following control is noted. That is, when the temperature in the reactor 10 detected by the temperature sensor T exceeds the setting temperature of the jacket 13 as the temperature regulating means, the pump 5 is controlled to increase the supply flow rate of the raw material monomer, so that the relative supply flow rate of the polymerization initiator into the reactor 10 is decreased. When the temperature in the reactor 20 detected by the temperature sensor T exceeds the setting temperature of the jacket 23 as the temperature regulating means, the pump 5 is controlled to increase the flow rate of the raw material monomer, so that the relative flow rate of the polymerization initiator into the reactor 20 is decreased. The control of the pump 5 may be appropriately combined with the control of the flow control valve 8. For example, the supply flow rate of the raw material monomer into the reactor 10 or 20 can be increased by controlling the flow control valve 8 while controlling the pump 5. By conducting such control, the temperature in the reactor 10 and/or 20 can also be lowered.

A ratio of the supply flow rate of the raw material monomer and the supply flow rate of the polymerization initiator can be appropriately set depending on the kind of the polymer generated, the kind of the polymerization initiator used, and so on.

Also, degree of increase or decrease in the supply flow rate of the raw material monomer and/or the supply flow rate of the polymerization initiator can be appropriately set depending on the kind of the polymer generated, the kind of the polymerization initiator used, and so on. However, in a case what is supplied to the reactors 10 and 20 by the initiator supply means is not the polymerization initiator only, but the raw material monomer comprising the polymerization initiator, it is necessary to consider a content ratio of the polymerization initiator in the raw material monomer comprising polymerization initiator to control the supply flow rate of the polymerization initiator.

The mixer 26 is to evenly mix polymer fractions taken out through the respective effluent lines 15 and 25, and may be located at a confluent part of the effluent lines 15 and 25 as shown in Fig. 1 or on the common effluent line 27. Additionally, it is not necessary for this embodiment, but a preheater 31 and a devolatilizing extruder 33 may be located downstream of the common effluent line 27. In a case where the preheater 31 presents, in place of the mixer 26 and the preheater 31 shown as a separate apparatuses in the drawings, a combined apparatus of the mixer 26 and the preheater 31 such as a static mixer or the like may be used and located at a position of the shown preheater 31 in the drawings. There may be a pressure adjusting valve (not shown in the drawings) provided between the preheater 31 and the devolatilizing extruder 33. An extruded object after devolatilization is discharged from a discharge line 35.

As the preheater 31, any appropriate heater can be used as long as it is able to heat a viscous fluid. As the devolatilizing extruder 33, a single or multi screw devolatilizing extruder can be used.

Further, there may be a recovery tank 37 for storing the raw material monomer which is separated and recovered from a volatile component (comprising unreacted raw material mainly) having been separated with the devolatilizing extruder 33.

Next, a process for producing a polymer composition conducted by using such apparatus will be described. In this embodiment, a case of conducting continuous polymerization of a methacrylic ester monomer, in other words, a case of producing a methacrylic ester polymer will be described, although the present invention is not limited thereto.

### • Preparation

At first, the raw material monomer, the polymerization initiator and so on are prepared.

As the raw material monomer, a methacrylic ester monomer is used in this embodiment.

Examples of the methacrylic ester monomer are
- alkyl methacrylate (of which alkyl group has 1 to 4 carbons) alone, or
- a mixture of not less than 80% by weight of alkyl
methacrylate (of which alkyl group has 1 to 4 carbons) and not more that 20% by weight of other vinyl monomer copolymerizable therewith.

Examples of alkyl methacrylate (of which alkyl group has 1 to 4 carbons) include methyl methacrylate, ethyl methacrylate, n-propyl methacrylate, isopropyl methacrylate, n-butyl methacrylate, t-butyl methacrylate, sec-butyl methacrylate, isobutyl methacrylate, and so on. Among them, methyl methacrylate is preferred. The above described examples of alkyl methacrylate may be used alone or in combination of at least two of them.

Examples of copolymerizable vinyl monomer include methacrylic esters such as benzyl methacrylate and 2-ethylhexyl methacrylate (except for the above described alkyl methacrylate (of which alkyl group has 1 to 4 carbons)); acrylic esters such as methyl acrylate, ethyl acrylate, propyl acrylate, butyl acrylate, and 2-ethylhexyl acrylate; unsaturated carboxylic acids or acid anhydrides thereof such as acrylic acid, methacrylic acid, maleic acid, itaconic acid, maleic acid anhydride, and itaconic acid anhydride; hydroxy group-containing monomers such as 2-hydroxyethyl acrylate, 2-hydroxypropyl acrylate, monoglycerol acrylate, 2-hydroxyethyl methacrylate, 2-hydroxypropyl methacrylate, and monoglycerol methacrylate; nitrogen-containing monomers such as acrylamide, methacrylamide, acrylonitrile, methacrylonitrile, diacetoneacrylamide, and dimethylaminoethyl methacrylate; epoxy group-containing monomers such as allyl glycidyl ether, glycidyl acrylate, and glycidyl methacrylate; styrene based monomers such as styrene and α-methylstyrene.

As the polymerization initiator, for example, a radical initiator is used in this embodiment.

Examples of a radical initiator include azo compounds such as azobisisobutyronitrile, azobisdimethylvaleronitrile, azobiscyclohexanenitrile, 1,1'-azobis(1-acetoxy-1-phenylethane), dimethyl 2,2'-azobisisobutylate, and 4,4'-azobis-4-cyanovaleric acid; organic peroxides such as benzoyl peraxide, lauroyl peroxide, acetyl peroxide, caprylyl peroxide, 2,4-dichlorobenzoyl peroxide, isobutyl peroxide, acetyl cyclohexylsulfonyl peroxide, t-butyl peroxypivalate, t-butyl peroxyneadecanoate, t-butyl peroxyneoheptanoate, t-butyl peroxy-2-ethylhexanoate, 1,1-di(t-butylperoxy)cyclohexane, 1,1-di(t-butylperoxy)-3,3,5-trimethylcyclohexane, 1,1-di(t-hexylperoxy)-3,3,5-trimethylcyclohexane, isopropyl peroxydicarbonate, isobutyl peroxydicarbonate, s-butyl peroxydicarbonate, n-butyl peroxydicarbonate, 2-ethylhexyl peroxydicarbonate, bis(4-t-butylcyclohexyl) peroxydicarbonate, t-amyl peroxy-2-ethylhexanoate, 1,1,3,3-tetramethyl butyl peroxy-ethylhexanoate, 1,1,2-trimethyl propyl peroxy-2-ethylhexanoate, t-butyl peroxy isopropyl monocarbonate, t-amyl peroxy isopropyl monocarbonate, t-butyl peroxy-2-ethylhexyl carbonate, t-butyl peroxy allyl carbonate, t-butyl peroxy isopropyl carbonate, 1,1,3,3-tetramethyl butyl peroxy isopropyl monocarbonate, 1,1,2-trimethyl propyl peroxy isopropyl monocarbonate, 1,1,3,3-tetramethyl butyl peroxy isononate, 1,1,2-trimethyl propyl peroxy-isononate, and t-butyl peroxybenzoate.

These polymerization initiators may be used alone or in combination of at least two of them.

The polymerization initiator is selected according to the kinds of the polymer generated and the raw material monomer used. For example, while the present invention is not particularly limited, those radical polymerization initiators having a half-life of not more than one minute at the polymerization temperature are preferable. When the half-life at the polymerization temperature is at most one minute, the reaction rate is suitable, thus the initiator is suitable for the polymerization reaction in the continuous polymerization apparatus.

The supply amount of the polymerization initiator (radical initiator) is not particularly limited, but is generally 0.001 to 1% by weight with respect to the raw material monomer (the raw material monomer eventually supplied to each of the reactors 10 and 20). In a case where the polymerization initiator tank 17 and the pump 19 are present in addition to the polymerization initiator tank 3 and the pump 7, a ratio of the polymerization initiator to the raw material monomer in the second reactor 20 can be higher than that in the first reactor 10. When the polymerization initiator tank 17 supplies the mixture of the raw material monomer and the polymerization initiator to the second reactor 20 by the pump 19, the total supply amount of the polymerization initiator supplied to the reactor 20 is made within the above range with respect to the sum of the raw material monomer eventually supplied to the reactor 20.

In addition to the raw material monomer and the polymerization initiator described above, any appropriate other component(s), for example, a chain transfer agent, a rubbery polymer such as butadiene and styrene-butadiene rubber (SBR), and so on may be used. The chain transfer agent is used for adjusting a molecular weight of the polymer generated.

As to the chain transfer agent, either monofunctional or polyfunctional chain transfer agent can be used. More specifically, examples thereof include alkyl mercaptans such as n-propyl mercaptan, isopropyl mercaptan, n-butyl mercaptan, t-butyl mercaptan, n-hexyl mercaptan, n-octyl mercaptan, 2-ethylhexyl mercaptan, n-dodecyl mercaptan, and t-dodecyl mercaptan; aromatic mercaptans such as phenyl mercaptan and thiocresol; mercaptans having 18 or less carbons such as ethylene thioglycol; polyalcohols such as ethylene glycol, neopentyl glycol, trimethylolpropane, pentaerythritol, dipentaerythritol, tripentaerythritol, and sorbitol; those of which hydroxyl group is esterified with thioglycolic acid or 3-mercaptopropionic acid, 1,4-dihydronaphthalene, 1,4,5,8-tetrahydronaphthalene, β-terpinene, terpinolene, 1,4-cyclohexadiene, hydrogen sulfide and so on. These may be used alone or in combination of at least two of them.

The supply amount of the chain transfer agent is not particularly limited since it varies depending on the kind of the chain transfer agent used and so on. For example, in a case of using mercaptans, it is preferably 0.01 to 3% by weight, and more preferably 0.05 to 1% by weight with respect to the raw material monomer (the raw material monomer eventually supplied to each of the reactors 10 and 20).

In the raw material monomer tank 1, the raw material monomer (one kind or a mixture of two or more kinds) as described above is appropriately prepared (together with other component(s) such as the chain transfer agent as the case may be). In the polymerization initiator tank 3, the polymerization initiator as described above is appropriately prepared with the raw material monomer if necessary (together with other competent(s) such as the chain transfer agent as the case may be). The polymerization initiator tank 3 may store the polymerization initiator alone or in the form of the mixture of the raw material monomer and the polymerization initiator (may further comprise other component(s) such as the chain transfer agent as the case may be). In a case of using the polymerization initiator tank 17, in the polymerization initiator tank 17, the polymerization initiator as described above is appropriately prepared with the raw material monomer if necessary (together with other component (s) such as the chain transfer agent as the case may be). The polymerization initiator tank 17 may store the polymerization initiator alone or in the form of the mixture of the raw material monomer and the polymerization initiator (may further comprise other component(s) such as the chain transfer agent as the case may be). However, in a case where the polymerization initiator tank 17 is connected to the supply port 21c via the pump 19, storing of the polymerization initiator alone raises a concern of local proceeding of the polymerization reaction in the reactor 20 since the polymerization initiator is solely supplied to the reactor 20. On the contrary, storing in the form of the mixture of the raw material monomer and the polymerization initiator is able to solve such concern since the polymerization initiator is mixed with a part of the raw material monomer beforehand.

### • Dividing Step

The raw material monomer and the polymerization initiator supplied from the raw material monomer tank 1 and the polymerization initiator tank 3 as the supply source of the raw material monomer and the polymerization initiator are made in the form of a mixture comprising them, and thus obtained mixture is divided by the flow control valve 8. More specifically, the raw material monomer is supplied from the raw material monomer tank 1 by the pump 5, and the polymerization initiator (preferably, the mixture of the raw material monomer and the polymerization initiator, which is also simply referred to as the polymerization initiator herein) is supplied from the polymerization initiator tank 3 by the pump 7, and they merge together through the common part 9a of the raw material supply line 9, and then the mixture thereof is divided into a first raw material fraction and a second raw material fraction. Such division can be conducted by using the flow control valve 8 installed on the raw material supply line 9.

A ratio of division of the mixture comprising the raw material monomer and the polymerization initiator into the first raw material fraction and the second raw material fraction is adjustable by the flow control valve 8. A ratio of a flow rate of the first raw material fraction and a flow rate of the second raw material fraction can be appropriately set depending on the kind of the polymer generated, the kinds of the raw material monomer and the polymerization initiator used, respective inner volumes of the first reactor 10 and the second reactor 20, and so on. A composition of each of the first raw material fraction and the second raw material fraction can be substantially the same as that of the original mixture (the mixture just prior to the division).

For supplying the polymerization initiator, when the mixture of the raw material monomer and the polymerization initiator is prepared in the polymerization initiator tank 3 and supplied therefrom, it is preferable to adjust a ratio A : B in a range from 80:20 to 98:2 wherein A represents the supply flow rate (kg/h) of the raw material monomer from the raw material monomer tank 1, and B represents the supply flow rate (kg/h) of the mixture of the raw material monomer and the polymerization initiator (of which content ratio of the polymerization initiator is preferably 0.002 to 10% by weight) from the polymerization initiator tank 3. Such ratio A : B is understood as a mixing ratio in the mixture just before being divided with the flow control valve 8.

### • First polymerization Step

The first raw material fraction divided as described
above is supplied to the first reactor 10 via the supply port 11a through the first part 9b of the raw material supply line 9, and subjected to continuous polymerization, continuous bulk polymerization in this embodiment (in other words, polymerization with no solvent), under an adiabatic condition (condition with substantially no heat transfer to or from outside of the reactor) in the first reactor 10. This first polymerization step is to subject the raw material monomer and the polymerization initiator to continuous polymerization by using the first raw material fraction and let the polymerization reaction proceed to the desired polymerization rate, and a first polymer fraction (or polymerization syrup) is taken from the effluent port 11b of the first reactor 10.

The temperature of the first raw material fraction supplied to the first reactor 10 is not particularly limited. However, this is one of the factors which may change the polymerization temperature by losing a heat balance in the reactor, and therefore it is preferable to adjust that temperature appropriately by a heater/cooler (not shown in the drawings) before the supply to the first reactor 10. Such heater/cooler may be located at any appropriate position from the raw material monomer tank 1 and the polymerization initiator tank 3 to the first reactor 10.

For supplying the polymerization initiator to the first reactor 10, when the mixture of the raw material monomer and the polymerization initiator is prepared in the polymerization initiator tank 3 and supplied therefrom, a ratio A₁ : B₁ is equal to the above described A : B, wherein A₁ represents the supply flow rate (kg/h) of the raw material monomer supplied from the raw material monomer tank 1 and divided into the first raw material fraction, and B₁ represents the supply flow rate (kg/h) of the mixture of the raw material monomer and the polymerization initiator (of which content ratio of the polymerization initiator is preferably 0.002 to 10% by weight) supplied from the polymerization initiator tank 3 and divided into the first raw material fraction.

In the first polymerization step, the continuous polymerization is preferably conducted under a condition in which the reactor is filled with the reaction mixture while substantially no gas phase is present (hereinafter referred to as a fully filled condition). This is especially suitable to the continuous bulk polymerization. The fully filled condition can prevent beforehand the problems such as that gel adheres to and grows on the inner surface of the reactor, and that this gel is immixed into the reaction mixture to degrade quality of a polymer composition obtained in the end. Further, the fully filled condition enables all of the inner volume of the reactor to be used as a reaction space, and thereby a high productivity can be attained.

When the effluent port 11b of the first reactor 10 is located at the reactor's top as in this embodiment, the fully filled condition is conveniently realized simply by conducting the supply to and the taking from the first reactor 10 continuously. The locating of the effluent port at the reactor's top is especially preferable for continuously polymerizing a methacrylic ester monomer.

Further in the first polymerization step, the continuous polymerization is conducted under the adiabatic condition. This is especially suitable to the continuous bulk polymerization. The adiabatic condition can prevent beforehand the problems such as that gel adheres to and grows on the inner surface of the reactor, and that this gel is immixed into the reaction mixture to degrade quality of a polymer composition obtained in the end. Further, the adiabatic condition enables the polymerization reaction to become stable, and self regulating characteristics for suppressing a runaway reaction can be brought about.

The adiabatic condition can be realized by making the temperature of the inside of the first reactor 10 and the temperature of the outer surface thereof generally equal to each other. More specifically, this can be realized, with the use of the above described control unit (not shown in the drawings), by adjusting the supply amounts of the raw material monomer and the polymerization initiator to the first reactor 10 with operating the pumps 5 and 7 and the flow control valve 8 such that the temperature of the outer surface of the first reactor 10 set for the jacket (temperature regulating means) 13 and the temperature in the first reactor 10 detected by the temperature sensor (temperature detecting means) T correspond to each other. It is not preferable to set the temperature of the outer surface of the reactor much higher than the temperature in the reactor since it adds extra amount of heat into the reactor. The smaller the difference between the temperature in the reactor and the temperature of the outer surface of the reactor is, the better it is. More specifically, it is preferable to adjust the temperature difference within the range of ± 5°C.

The heat generated in the first reactor 10 such as polymerization heat and stirring heat is generally carried away on taking the first polymer fraction from the first reactor 10. The amount of the heat carried away by the first polymer fraction is determined by the flow rate and the specific heat of the first polymer fraction, and the temperature of the polymerization reaction.

The temperature of the continuous polymerization in the first polymerization step is understood as the temperature in the first reactor 10 (detected by the temperature sensor T). This temperature changes according to various conditions until it reaches a static state, and is not particularly limited, but is, for example, about 100 to 180°C.

The pressure of the continuous polymerization in the first polymerization step is understood as the pressure in the first reactor 10. This pressure is a pressure not less than a vapor pressure of the raw material monomer at the temperature in the reactor to prevent gas of the raw material monomer from generating in the reactor, and is generally about 1.0 to 2.0 MPa in gauge pressure.

The time period for being subjected to the continuous polymerization in the first polymerization step is understood as an average residence time in the first reactor 10. The average residence time can be set according to the productivity of the polymer in the first polymer fraction and so on, and is not particularly limited, but is, for example, from 15 minutes to 6 hours. This average residence time can be adjusted by using the pumps 5 and 7 to change the supply amount (supply flow rate) of the raw material monomer or the like to the first reactor 10, or can be adjusted by using the flow control valve 8 to change the supply amount (supply flow rate) of the raw material monomer or the like to the first reactor 10. However, since the average residence time also depends in a large part on the inner volume of the first reactor 10, how the inner volume of the first reactor 10 and the inner volume of the second reactor 20 are designed is also important as hereinafter described.

As described above, the first polymer fraction is taken from the effluent port 11b of the first reactor 10. The obtained first polymer fraction comprises the generated polymer, and may further comprise the unreacted raw material monomer, the unreacted polymerization initiator, decomposed substance of the polymerization initiator, and so on.

Although this embodiment is not limited thereto, the polymerization rate in the first polymer fraction is, for example, 5 to 90% by weight, and preferably 30 to 80% by weight. The polymerization rate in the first polymer fraction generally corresponds to the content ratio of the polymer in the first polymer fraction. The higher the polymerization rate, the higher the productivity of the polymer, but also the higher the viscosity of the polymer fraction, resulting in the larger the necessary power for stirring. The lower the polymerization rate, the lower the productivity of the polymer, resulting in the larger the load for recovering the unreacted raw material monomer. Therefore, it is preferable to set an appropriate polymerization rate as a target or a guide for the first polymer fraction.

### • Second polymerization Step

The second polymerization step is conducted in parallel to the first polymerization step.

The second raw material fraction divided as described
above is supplied to the second reactor 20 via the supply port 21a through the second part 9c of the raw material supply line 9 (if necessary, together with the polymerization initiator supplied from the polymerization initiator tank 17), and subjected to continuous polymerization, continuous bulk polymerization in this embodiment, under an adiabatic condition in the second reactor 20. This second polymerization step is to subject the raw material monomer and the polymerization initiator to continuous polymerization by using the second raw material fraction and let the polymerization reaction proceed to the desired polymerization rate, and a second polymer fraction (or polymerization syrup) is taken from the effluent port 21b of the second reactor 20.

Hereinafter, the second polymerization step will be described mainly with respect to different points from the first polymerization step, and explanations similar to those for the first polymerization step apply unless otherwise explained.

The temperature of the second raw material fraction supplied to the second reactor 20 (when it is mixed with the polymerization initiator supplied from the polymerization initiator tank 17, a mixture of them) is not particularly limited. However, this is one of the factors which may change the polymerization temperature by losing a heat balance in the reactor, and therefore it is preferable to adjust that temperature appropriately by a heater/cooler (not shown in the drawings) before the supply to the second reactor 20. Such heater/cooler may be located at any appropriate position from the raw material monomer tank 1 and the polymerization initiator tank 3 to the second reactor 20.

Although it is not necessary to this embodiment, the polymerization initiator tank 17 and the pump 19 may be used, if necessary. In a case of using the polymerization initiator tank 17 and the pump 19, the additional (or fresh) polymerization initiator (preferably, the mixture of the raw material monomer and the polymerization initiator) is supplied from the polymerization initiator tank 17 by the pump 19 through the second part 9c of the raw material supply line 9 to the second reactor 20 via the supply port 21a or the another supply port 21c, and thereby the second raw material fraction is added with the additional polymerization initiator. The temperature of the polymerization initiator supplied to the second reactor 20 from the polymerization initiator tank 17 is not particularly limited. However, this is one of the factors which may change in the polymerization temperature by losing a heat balance in the reactor, and therefore it is preferable to adjust that temperature appropriately by a heater/cooler (not shown in the drawings) before the supply to the reactor 20. Such heater/cooler may be located at any appropriate position from the polymerization initiator tank 17 to the second reactor 20.

For supplying the polymerization initiator to the second reactor 20, when the mixture of the raw material monomer and the polymerization initiator is prepared in the polymerization initiator tanks 3 and 17 and supplied therefrom, it is preferable to adjust a ratio A₂ : (B₂ + B₃) in a range from 80:20 to 98:2 and a ratio B₂ : B₃ in a range from 10:90 to 90:10 wherein A₂ represents the supply flow rate (kg/h) of the raw material monomer supplied from the raw material monomer tank 1 and divided into the second raw material fraction, B₂ represents the supply flow rate (kg/h) of the mixture of the raw material monomer and the polymerization initiator (of which content ratio of the polymerization initiator is preferably 0.002 to 10% by weight) supplied from the polymerization initiator tank 3 and divided into the second raw material fraction, and B₃ represents a supply flow rate (kg/h) of the mixture of the raw material monomer and the polymerization initiator (of which content ratio of the polymerization initiator is preferably 0.002 to 10% by weight) from the polymerization initiator tank 17.

Also in the second polymerization step, the continuous polymerization is preferably conducted under a fully filled condition. This is especially suitable to the continuous bulk polymerization. The fully filled condition can prevent beforehand the problems such as that gel adheres to and grows on the inner surface of the reactor, and that this gel is immixed into the reaction mixture to degrade quality of the polymer composition obtained in the end. Further, the fully filled condition enables all of the inner volume of the reactor to be used as a reaction space, and thereby a high productivity can be attained.

When the effluent port 21b of the second reactor 20 is located at the reactor's top as in this embodiment, the fully filled condition is conveniently realized simply by conducting the supply to and the taking from the second reactor 20 continuously. The locating of the effluent port at the reactor's top is especially preferable for continuously polymerizing a methacrylic ester monomer.

Also, further in the second polymerization step, the continuous polymerization is conducted under the adiabatic condition. This is especially suitable to the continuous bulk polymerization. The adiabatic condition can prevent beforehand the problems such as that gel adheres to and grows on the inner surface of the reactor, and that this gel is immixed into the reaction mixture to degrade quality of the polymer composition obtained in the end. Further, the adiabatic condition enables the polymerization reaction to become stable, and self regulating characteristics for suppressing a runaway reaction can be brought about.

The adiabatic condition can be realized by making the temperature of the inside of the second reactor 20 and the temperature of the outer surface thereof generally equal to each other. More specifically, this can be realized, with the use of the above described control unit (not shown in the drawings), by adjusting the supply amounts of the raw material monomer and the polymerization initiator to the second reactor 20 with operating the pumps 5 and 7, the flow control valve 8 and, if present, the pump 19 such that the temperature of the outer surface of the second reactor 20 set for the jacket (temperature regulating means) 23 and the temperature in the second reactor 20 detected by the temperature sensor (temperature detecting means) T correspond to each other. It is not preferable to set the temperature of the outer surface of the reactor much higher than the temperature in the reactor since it adds extra amount of heat into the reactor. The smaller the difference between the temperature in the reactor and the temperature of the outer surface of the reactor is, the better it is. More specifically, it is preferable to adjust the temperature difference within the range of ± 5°C.

The heat generated in the second reactor 20 such as polymerization heat and stirring heat is generally carried away on taking the second polymer fraction from the second reactor 20. The amount of the heat carried away by the second polymer fraction is determined by the flow rate and the specific heat of the second polymer fraction, and the temperature of the polymerization reaction.

The temperature of the continuous polymerization in the second polymerization step is understood as the temperature in the second reactor 20. This temperature is, for example, about 100 to 200°C. The temperature in the second polymerization step may be equal to the temperature in the first polymerization step, but is preferably different from it.

The pressure of the continuous polymerization in the second polymerization step is understood as the pressure in the second reactor 20. This pressure is generally about 1.0 to 2.0 MPa in gauge pressure, and may be equal to the pressure in the first polymerization step.

The time period for being subjected to the continuous polymerization in the second polymerization step is understood as an average residence time in the second reactor 20. The average residence time can be set according to the productivity of the polymer in the second polymer fraction and so on, and is not particularly limited, but is, for example, from 15 minutes to 6 hours. The average residence time in the second polymerization step may be equal to the average residence time in the first polymerization step, but is preferably different from it. The average residence time in the second polymerization step can be adjusted by using the pumps 5 and 7 and, if present, the pump 19 to change the supply amount (supply flow rate) of the raw material monomer or the like to the second reactor 20, or can be adjusted by using the flow control valve 8 to change the supply amount (supply flow rate) of the raw material monomer or the like to the second reactor 20. However, since the average residence time also depends in a large part on the inner volume of the second reactor 20, how the inner volume of the first reactor 10 and the inner volume of the second reactor 20 are designed is also important as hereinafter described.

As described above, the second polymer fraction is taken from the effluent port 21b of the second reactor 20. The obtained second polymer fraction comprises the generated polymer, and may further comprise the unreacted raw material monomer, the unreacted polymerization initiator, decomposed substance of the polymerization initiator, and so on.

Although this embodiment is not limited thereto, the polymerization rate in the second polymer fraction is, for example, 5 to 90% by weight, and preferably 30 to 80% by weight. The polymerization rate in the second polymer fraction generally corresponds to the content ratio of the polymer in the second polymer fraction. The higher the polymerization rate, the higher the productivity of the polymer, but also the higher the viscosity of the polymer fraction, resulting in the larger the necessary power for stirring. The lower the polymerization rate, the lower the productivity of the polymer, resulting in the larger the load for recovering the unreacted raw material monomer. Therefore, it is also preferable to set an appropriate polymerization rate as a target or a guide for the second polymer fraction.

### • Blending Step

The first polymer fraction taken out of the first reactor 10 through the effluent line 15 and the second polymer fraction taken out of the second reactor 20 through the effluent line 25 are blended together by the mixer 26 to obtain a polymer composition (polymerization syrup) from the common effluent line 27.

Thus obtained polymer composition has properties which
result by combining (summing or compounding) the properties of the first polymer fraction and the properties of the second polymer fraction.

By conducting the continuous polymerization in two lines as in this embodiment, the polymerization reaction conditions, more specifically, the temperature, the time period (average residence time), the amount of the polymerization initiator (a ratio of the polymerization initiator to the raw material monomer) and so on can be set for the first polymerization step and the second polymerization step independently.

For example, it becomes possible by differentiating between the first reactor and the second reactor in the polymerization reaction conditions, more specifically, the temperature, the time period (average residence time), the amount of the polymerization initiator (a ratio of the polymerization initiator to the raw material monomer) and so on, to differentiate a molecular weight distribution of the first polymer fraction from a molecular weight distribution of the second polymer fraction, and it becomes possible by blending them to obtain a polymer composition of which molecular weight distribution is controlled. In general, the higher the molecular weight, the higher the mechanical strength and heat resistance, but the lower the molding processability. On the other hand, the lower the molecular weight, the higher the molding processability, but sufficient mechanical strength and heat resistance can not be obtained. Thus, a polymer fraction of a high molecular weight and a polymer fraction of a low molecular weight are obtained as the first polymer fraction and the second polymer fraction described above and mixed (blended) together, so that a polymer composition of a broad or bimodal molecular weight distribution can be obtained. Therefore, a polymer composition having good molding processability (e.g. flowability, injection molding formability, and so on) and high mechanical strength and heat resistance can be obtained.

According to this embodiment, it is possible to obtain a polymer composition having a bimodal molecular weight distribution more effectively. In the melt kneading method described in JP 2008-538794 A, for example, a polymer of a high molecular weight and a polymer of a low molecular weight are separately produced and made in an appropriate form for blending (generally, pellets) beforehand, and they are subjected to melt blending, that is, mixed at a certain ratio and charged into an extruder to be melt kneaded, and then arranged into a certain form (generally, pelletized). In contrast, according to this embodiment, the first polymer fraction and the second polymer fraction respectively obtained in the first reactor and the second reactor are directly mixed together. Therefore, in comparison to the melt kneading method in which polymers once formed are subjected to melt blending followed by being formed again (repelletized), this embodiment can be conducted by less number of steps, and can avoid the possibility of slight coloring by heating and of immixing of a foreign material during the melt kneading, and can continuously obtain the polymer composition of high quality with good productivity. Further, in the two stage polymerization method described in WO 2007/060891, for example, a first stage polymerization is conducted by supplying a certain raw material to a reactor and then a second stage polymerization is conducted by adding a certain raw material to this reactor, and such two stage polymerization method is generally conducted by suspension polymerization. In the suspension polymerization, a suspension stabilizing agent is usually used, and an aqueous solution of sulfuric acid is sometimes added to dissolve and remove the suspension stabilizing agent after the polymerization. Also in the suspension polymerization, a polymer in the form of beads, which is obtained by dehydration and drying after the polymerization, is to be melt kneaded and pelletized in an extruder. In contrast, according to this embodiment, continuous bulk polymerization is conducted in the first reactor and the second reactor. Therefore, this embodiment can avoid the use of additives such as a suspension stabilizing agent and an aqueous solution of sulfuric acid, and does not require operations such as dehydration and drying, and thus, can avoid the possibility of immixing of a foreign material due to these additives and additional operations, and can continuously obtain the polymer composition of high quality with good productivity.

How the polymerization reaction conditions are set for each of the first polymerization step and the second polymerization step may vary according to the properties and productivity desired, and so on.

### • Devolatilization Step

The polymer composition (polymerization syrup) obtained as described above may comprise the unreacted raw material monomer and polymerization initiator and so on, in addition to the generated polymer. Although this embodiment is not limited thereto, such polymer composition is preferably subjected to, for example, devolatilization to separate and recover the raw material monomer.

More specifically, the polymer composition is transferred to the preheater 31 through the common effluent line 27. The polymer composition in the preheater 31 is subjected to part or all of an amount of heat necessary to volatilize the volatile component which is mainly composed of the unreacted raw material monomer. Then, the polymer composition is transferred to the devolatilizing extruder 33 via the pressure adjusting valve (not shown in the drawings), and the volatile component is at least partially removed in the devolatilizing extruder, and a residual extruded object is formed into pellets and discharged from the discharge line 35. Thereby, the resin composition comprising a methacrylic ester polymer is produced in the form of the pellets.

As a method for transferring the above polymer composition, a method described in JP 4-48802 B is preferable. As a method of using a devolatilizing extruder, methods described in, for example, JP 3-49925 A, JP 51-29914 B, JP 52-17555 B, JP 1-53682 B, JP 62-89710 A and so on are preferable.

Further, during or after devolatilization of the polymer composition in the devolatilizing extruder described above, the polymer composition or the extruded object can be added with a lubricating agent such as higher alcohols and higher fatty acid esters, an ultraviolet absorber, a heat stabilizer, a colorant, an antistatic agent and so on, in order to incorporate them into the resin composition, if necessary.

The volatile component removed in the devolatilizing extruder 33 consists primarily of the unreacted raw material monomer and includes impurities; e.g. impurities originally contained in the raw material monomer, additives used if necessary, volatile by-praduct(s) generated in the process of polymerization, oligomer such as dimer and trimer, decomposed substance of the polymerization initiator, and so on. In general, a larger amount of the impurities make the obtained resin composition colored, which is not preferable. Then, the volatile component removed in the devolatilizing extruder 33 (which consists primarily of the unreacted raw material monomer and includes impurities as described above) may be passed through a monomer recovery column (not shown in the drawings), and treated by means of distillation, adsorption and so on in the monomer recovery column to remove the impurities from the above described volatile component. Thereby, the unreacted raw material monomer can be recovered with high purity, so that it can be suitably reused as the raw material monomer for polymerization. For example, continuous distillation is conducted in the monomer recovery column to recover the unreacted raw material monomer with high purity as a distillate liquid from the top of the monomer recovery column, and it may be transferred and recycled to the raw material monomer tank 1 after it is reserved in the recovery tank 37 once, or it may be transferred and recycled to the raw material monomer tank 1 without being reserved in the recovery tank 37. On the other hand, the impurities removed in the monomer recovery column may be disposed as waste.

In order to prevent the recovered raw material monomer from causing the polymerization reaction in the recovery tank 37 and/or the raw material monomer tank 1, it is preferable that a polymerization inhibitor exists in the recovery tank 37 or the raw material monomer tank 1 at a ratio of, for example, 2 to 8 ppm by weight with respect to the raw material monomer, and more preferably, in addition to this, an oxygen concentration in a gas phase in the recovery tank 37 or the raw material monomer tank 1 is set at 2 to 8% by volume. If the recovered raw material monomer is wanted to be preserved in the recovery tank 37 for a long time, it is preferable to reserve it at a low temperature of, for example, 0 to 5°C.

In this embodiment, the continuous bulk polymerization apparatus wherein the first reactor and the second reactor are both used to conduct the continuous bulk polymerization is described. However, the continuous polymerization apparatus of the present invention is not limited thereto, one or both of the first reactor and the second reactor may be used to conduct continuous solution polymerization. In such embodiment, since a solvent is used for the solution polymerization, the continuous polymerization apparatus is provided, in addition to a similar configuration to the continuous polymerization apparatus described above with reference to Fig. 1, with a solvent tank and a supply line and a pump (supply means) associated with the solvent tank to supply the solvent to a certain reactor for conducting the solution polymerization. The solvent tank and the supply line and the pump (supply means) associated with the solvent tank are not particularly limited, those similar to conventionally used ones can be used. The solvent can be supplied to the certain reactor for conducting the solution polymerization after being mixed with raw material monomer and/or the polymerization initiator, or can be supplied to the certain reactor for conducting the solution polymerization directly. In the above certain reactor, the polymerization step is conducted similarly (under an adiabatic condition) to the polymerization step described in the above with reference to Fig. 1, except that the solvent is used in the polymerization reaction. As to the solvent, it is appropriately selected according to the raw material monomer of the solution polymerization reaction and so on, and not particularly limited, but examples thereof include toluene, xylene, ethyl benzene, methyl isobutyl ketone, methyl alcohol, ethyl alcohol, octane, decane, cyclohexane, decalin, butyl acetate, pentyl acetate, and so on. A ratio C : D is, for example, 70:30 to 95:5, and preferably 80:20 to 90:10, but not limited thereto, wherein C represents a supply flow rate (kg/h) of the raw material monomer to the certain reactor for conducting the solution polymerization, and D represents a supply flow rate (kg/h) of the solvent to this certain reactor.

The continuous polymerization apparatus and the process for producing the polymer composition of the present invention are hereinbefore described through the embodiment of the present invention in detail. According to the present invention, there is provided the novel continuous polymerization apparatus, and the use of such continuous polymerization apparatus can conduct the polymerization in at least two lines in parallel by using at least the first reactor and the second reactor, so that the polymerization reaction conditions, more specifically, the temperature, the time period (average residence time), the amount of the polymerization initiator (a ratio of the polymerization initiator to the raw material monomer) and so on can be set for the first polymerization step and the second polymerization step independently. Thereby, it becomes possible to control a molecular weight distribution of the polymer contained in the resin composition obtained in the end, and to produce more efficiently the polymer composition which is suitable for obtaining the resin composition having a variety of properties, more specifically, good molding processability, high mechanical strength, high heat resistance, and so on.

However, the present invention is not limited to the above embodiment, and various modifications can be made. For example, three or more reactors can be used to conduct the polymerization in three or more lines in parallel. For example, the effluent port may be located on the reactor at other positions than the reactor's top.

### Industrial Applicability

The present invention can be used for producing a polymer composition which is suitable for obtaining a resin composition comprising a methacrylic ester polymer(s).

The present application claims priority to Japanese Patent Application No. 2011-14342 filed on January 26, 2011, entitled "CONTINUOUS POLYMERIZATION APPARATUS AND PROCESS FOR PRODUCING POLYMER COMPOSITION." The contents of that application are incorporated herein by the reference thereto in their entirety.

## Claims

1. A continuous polymerization apparatus suitable for continuously polymerizing a methacrylic ester monomer, and comprising at least two reactors of a complete mixing type, **characterized in that**
each of the reactors is provided with a supply port and an effluent port;
the respective supply ports of the two reactors are commonly connected to a supply source of a raw material monomer and a polymerization initiator;
a flow control valve is installed on a raw material supply line for supplying a mixture comprising the raw material monomer and the polymerization initiator from the supply source of the raw material monomer and the polymerization initiator to the respective supply ports of the two reactors; and
the respective effluent ports of the two reactors are connected to a common effluent line.

2. The continuous polymerization apparatus according to claim 1, wherein the effluent port of each of the reactors is located at a reactor's top.

3. The continuous polymerization apparatus according to claim 1 or 2, wherein the two reactors are both suitable to conduct continuous bulk polymerization.

4. The continuous polymerization apparatus according to any of claims 1 to 3, wherein any of said supply ports of the two reactors or another supply port provided to any of the two reactors is connected to a supply source of an additional polymerization initiator.

5. The continuous polymerization apparatus according to any of claims 1 to 4, wherein the two reactors have an inner volume which is different from each other.

6. A process for producing a polymer composition conducted by using the continuous polymerization apparatus according to any of claims 1 to 5, which comprises
a dividing step of dividing a mixture comprising a raw material monomer and a polymerization initiator supplied from the supply source of the raw material monomer and the polymerization initiator into at least a first raw material fraction and a second raw material fraction by the flow control valve;
a first polymerization step of supplying the first raw material fraction to a first reactor of said two reactors through the supply port of the first reactor to be subjected to continuous polymerization under an adiabatic condition in the first reactor, and taking a resultant first polymer fraction from the effluent port of the first reactor;
a second polymerization step of supplying the second raw material fraction to a second reactor of said two reactors through the supply port of the second reactor to be subjected to continuous polymerization under an adiabatic condition in the second reactor, and taking a resultant second polymer fraction from the effluent port of the second reactor; and
a blending step of blending the first polymer fraction and the second polymer fraction to obtain a polymer composition.
